# EUROPEAN PATENT APPLICATION

(11) **EP 4 699 802 A1**
(43) Date of publication of application: **25.02.2026**
(21) Application number: 24791881.6
(22) Date of filing: 09.04.2024
(51) Int. Cl.: B32B 38/06, B32B 3/30, B29C 59/02, B05D 1/42

(54) **PRINTED PLATE WITH THREE-DIMENSIONAL WOOD GRAIN EFFECT ON PATTERNED SURFACE, AND PREPARATION METHOD THEREFOR**

(30) Priority: 18.04.2023 CN 202310427614
(71) Applicant: Hangzhou Print Flooring Technology Co., Ltd., Hangzhou, Zhejiang 311200 (CN)
(72) Inventor: YANG, Guocui, Hangzhou, Zhejiang 311200 (CN); LEI, Zhongshan, Hangzhou, Zhejiang 311200 (CN); DENG, Mengde, Hangzhou, Zhejiang 311200 (CN); HUANG, Donghui, Hangzhou, Zhejiang 311200 (CN); AO, Fangbing, Hangzhou, Zhejiang 311200 (CN); HUANG, Feng, Hangzhou, Zhejiang 311200 (CN)
(74) Representative: Garavelli, Paolo
(86) International application number: PCT/CN2024/086763
(87) International publication number: WO 2024/217296

(57) **Abstract**

The present invention belongs to the technical field of 3D printed panels, and specifically relates to a printed panel whose patterned surface has a three-dimensional wood grain effect and a method for its preparation. The invention introduces an additional pretreatment step, so that after the resin on the surface of the wood grain base layer is cured, the viscosity and/or hardness of the embossing liquid and/or the portion of the resin mixed with the embossing liquid and/or at least a part of the resin covered by the embossing liquid are reduced, effectively improving the problem of incomplete removal of the embossing layer by the steel brush roller. As a result, a three-dimensional wood grain structure is formed on the surface of the pattern layer, which has fine and natural texture, clear 3D patterns, accurate alignment, good visual decorative effect, sharp wood grain edges, and realistic tactile feel. By adding a post-treatment step after the embossing layer is removed, the residual embossing liquid and/or the portion of the resin mixed with the embossing liquid and/or at least a part of the resin covered by the embossing liquid are effectively removed, further enhancing the product quality of stone-plastic flooring with 3D wood texture.

## Description

### TECHNICAL FIELD

The present invention belongs to the technical field of 3D printed boards, and in particular relates to a printed board having a three-dimensional wood grain effect on a pattern surface and a method for manufacturing the same.

### BACKGROUND ART

Flooring mainly includes solid wood flooring, laminate flooring, and engineered (solid-wood composite) flooring. Solid wood flooring has natural texture, giving a natural, soft and friendly tactile feel, and has the characteristics of being warm in winter and cool in summer and having a good hand feel. However, large-scale use of solid wood flooring consumes large quantities of timber, costs are high, and it easily causes serious damage to the ecological environment. Engineered (solid-wood composite) flooring is formed by cross-laminating boards of different tree species, which to some extent overcomes the defects of wet swelling and dry shrinking of solid wood flooring, has small dry-shrink/swell rates, good dimensional stability, and retains the natural wood grain and comfortable foot feel of solid wood flooring. However, engineered flooring has a complex structure and high production process requirements. At the same time, the texture patterns of engineered flooring are not wear-resistant and are prone to fading; once damaged by water immersion they cannot be repaired, and costs are high. In addition, adhesives must be used in the production of engineered flooring, which easily release formaldehyde and other harmful gases, posing potential hazards to humans.

Laminate flooring is formed by impregnating one or more layers of special paper with thermosetting amino resin, laying them on artificial board substrates such as particleboard or high-density fiberboard, adding a balancing/moisture-proof layer on the back and an abrasion-resistant layer and decorative layer on the front, and then hot-pressing and forming the floor. Laminate flooring has excellent stain resistance, corrosion resistance, compressive strength, abrasion resistance, impact resistance and flame retardancy, good stability, is easy to maintain, and is low cost. The surface of laminate flooring is generally decorated by sticking printed paper, but the pasted paper is easy to detach, is susceptible to damage, and the texture is not realistic, resulting in poor simulation and decoration effects. The wear-resistant paper pasted on the surface can separate from the substrate due to foot traffic and vibration during use, reducing the service life of the flooring and degrading its quality and grade.

With the development of science and technology, plastics are increasingly used in daily life, and SPC flooring (stone plastic composite), with PVC as the main material, has gradually been favored by consumers. SPC flooring, also called stone-plastic flooring (the formal name should be "PVC sheet flooring"), is a high-quality, high-technology new type of flooring material. It uses stone powder to form a dense base layer with a high-density, high-fiber mesh structure, and the surface is covered with a specially processed transparent polymer PVC wear layer, providing excellent abrasion resistance. Stone-plastic flooring is green and environmentally friendly, is usually installed by locking without adhesives containing formaldehyde, and thus is non-toxic, harmless, free of radioactive pollution and environmentally friendly, and can be recycled. SPC flooring is popular in Europe, America and parts of Asia (including Japan and Korea), and after being introduced into the Chinese market it has been widely recognized and gradually become popular. SPC flooring is widely used in many places such as residential interiors, high-traffic hospitals, high-speed rail stations, office buildings, factories, supermarkets, shopping malls, and sports venues, and is increasingly welcomed. In addition, SPC flooring is waterproof and moisture-proof and does not deform when exposed to water. It is also electrically insulating, flame-retardant, resistant to acid and alkali corrosion, and highly safe, and in recent years it has rapidly captured mainstream domestic and international markets. SPC flooring is a widely used new type of flooring material worldwide, well received in the European, American and Asia-Pacific markets, and very common in China, with broad development prospects.

Except for solid wood flooring which has natural texture, other types of flooring require printing a pattern onto the substrate by printing technology, and then performing surface treatments such as coating with clear varnish to achieve wear resistance and scratch resistance. However, the decorative wood grain obtained in this way is presented as a planar pattern and does not have the visual impact of real wood grain. At the same time, the tactile feel of such decorative wood grain is coarse and indistinct, appearing stiff and lacking a wooden feel. Therefore, when reproducing wood texture on an SPC substrate, in addition to reproducing the planar color pattern, it is necessary to reproduce a three-dimensional wood grain structure with pronounced relief on the SPC substrate surface so as to obtain a three-dimensional decorative wood grain tactilely closer to natural wood, thereby producing SPC flooring with 3D wood texture that is delicate, realistic in appearance, true and comfortable to the touch, and with good three-dimensional effect.

To obtain natural, delicate wood grain and patterns and improve visual aesthetics, traditional 3D printed board techniques adopt bonding veneers and other film layers to the substrate surface to simulate wood grain, thereby partly substituting for solid wood flooring. For example, patent CN107740554 discloses an engineered SPC floor and its manufacturing method, where a solid wood veneer layer is bonded to the SPC substrate layer with hot-melt adhesive, making the product look very natural with an overall structure similar to solid wood flooring and a wood fragrance, more environmentally friendly. Because the solid wood veneer layer is only a thin layer on the SPC surface, and the veneer easily warps or deforms when damp or dried, the defect rate in SPC manufacturing is high. Another example, patent CN111231437B discloses an indoor floor and its preparation process based on polyolefin biomass composite material, where the core material is prepared from polyolefin and biomass and a veneer is laminated on the outer layer of the core. Because the veneer itself has wood texture and a certain thickness, the overall product has a strong wood feel. However, rare veneer materials on the market are often in short supply and costly, thus greatly restricting their use in flooring production.

Existing 3D printed board technologies use flatbed inkjet printers to print planar color patterns on substrates, then based on the texture requirements in the graphic, spray transparent/semi-transparent inks/varnish at specific locations and cure them to obtain the desired 3D patterned surface with three-dimensional wood grain structure. For example, patent CN112739463A discloses a method for manufacturing a three-dimensional surface on a substrate, which first applies a resin A to the substrate, and when resin A is liquid or partially cured, sprays a liquid B onto regions of resin A where a concave-convex 3D structure is desired, then polymerizes resin A and liquid B respectively, and removes the polymerized liquid B mechanically, thereby obtaining a 3D textured surface formed by liquid B in resin A; mechanical removal may include brushing with a steel brush. Another example, patent CN110773403A discloses a 3D printed board with a surface brushing effect; its manufacturing steps include: roll-coating an adhesion primer and drying; roll-coating a white primer and drying; roll-coating a transition coat and drying; printing color; roll-coating a wear layer varnish and drying; 3D printing the texture; performing a brushing process; applying UV topcoat and drying. A wood-grain brushing machine is used to brush uncured parts of the surface texture to obtain a brushed surface effect.

However, during development of SPC flooring manufacturing processes having 3D wood texture, researchers found that when resin is first applied over the printed planar pattern layer, then embossing liquid used to form the three-dimensional wood grain structure on the SPC pattern layer is sprayed by digital printing technology and cured, and subsequently the embossing layer is mechanically removed (e.g., removed by steel brush rollers/bands), it is difficult to remove the embossing layer cleanly. Embossing liquid and/or at least a portion of the resin liquid mixed with the embossing liquid and/or at least a portion of the resin liquid covered by the embossing liquid still remain and deposit in the recesses or protrusions of the three-dimensional wood grain layer. As a result, the obtained three-dimensional wood grain structure on the SPC surface differs significantly from real wood grain: the tactile feel is flat, relief is not pronounced, wood grain edges are not sharp, and tactile realism is poor. Meanwhile, the resulting SPC three-dimensional wood grain texture is insufficiently delicate and natural, the 3D pattern is unclear, and the visual decorative effect is poor, severely affecting the aesthetic quality of SPC flooring with 3D wood texture.

Therefore, researchers desire a new method capable of thoroughly removing the embossing layer to obtain a three-dimensional wood grain structure that is delicate and natural, true in touch, with clear 3D pattern and good decorative effect for SPC flooring with 3D wood texture; the method should be efficient, easy to operate and low in application cost, but this problem has not yet been solved.

### SUMMARY OF THE INVENTION

The present invention is intended to overcome the defect in the prior art that during the preparation of SPC flooring with 3D wood texture the embossing layer is difficult to remove by mechanical means, resulting in three-dimensional wood grain texture that is not delicate and natural, unclear 3D pattern, poor visual decorative effect and unreal tactile feel, and to provide a printed board having a three-dimensional wood grain effect on a pattern surface and a method for manufacturing the same.

In one aspect of the present invention, the applicant provides a method for generating a three-dimensional wood grain on a pattern surface by adding a pretreatment step.

In accordance with the first aspect, to achieve the above object the present invention is implemented by the following technical solutions:

A method for generating a three-dimensional wood grain on a pattern surface, comprising the following steps:
(1) a step of covering at least a portion of the surface of the pattern layer with a resin solution;
(2) a step of curing at least a portion of the resin solution on the surface of the pattern layer to form a wood grain base layer;
(3) a step of covering at least a portion of the surface of the wood grain base layer with at least one layer of resin solution;
(4) a step of applying an embossing solution to at least a portion of the surface of the resin solution on the surface of the wood grain base layer along the color pattern, such that the embossing solution and/or at least a portion of the resin solution mixed with the embossing solution and/or at least a portion of the resin solution covered by the embossing solution form an embossing layer;
(5) a step of curing the resin solution other than the embossing layer formed in the previous step;
(6) further comprising a pretreatment step in which the embossing layer is impregnated with a pretreatment agent;
(7) a step of removing the embossing layer, thereby forming a three-dimensional wood grain layer on the surface of the wood grain base layer.

Preferably, in step (3) at least a portion of the surface of the wood grain base layer is covered with at least two layers of resin solution.

Preferably, in step (4) the embossing solution is applied to the surface of the resin solution and/or permeates downward into the interior of the resin solution.

Preferably, in step (4) the embossing solution has a surface tension higher than that of the resin solution.

Preferably, in step (4) the embossing solution includes at least a curable resin.

Preferably, the curable resin contained in the embossing solution has, after curing, a surface energy lower than the surface energy of the three-dimensional wood grain layer.

Preferably, the curable resin contained in the embossing solution comprises any one of fluorocarbon resin, fluorosilicone resin, or organosilicon resin.

Preferably, the density of the embossing solution is greater than the density of the resin solution.

Preferably, the embossing solution further comprises a density regulator for adjusting the density of the embossing solution.

Preferably, the density regulator is an inorganic solid powder additive.

Preferably, the embossing solution comprises at least two embossing solutions having different surface tensions.

Preferably, step (6) further comprises a step of applying a pretreatment agent to the embossing layer.

Preferably, the pretreatment agent comprises at least an organic solvent.

Preferably, the organic solvent comprises any one or more of halogenated hydrocarbons, ketones, aromatic hydrocarbons, acrylates (esters of acrylic acid), alcohols, or ethers.

Preferably, the organic solvent comprises any one or more of dichloromethane, bromo-propane, trichloroethane, acetone, toluene, methanol, ethanol, diethyl ether, or chloroform.

Preferably, the pretreatment agent further comprises a resin monomer.

Preferably, the resin monomer is any one or a combination of acrylic monomer(s) and epoxy monomer(s).

Preferably, the application amount of the pretreatment agent is 1-5 g/m².

Preferably, in the pretreatment process of step (6), the surface of the embossing layer is brought into contact with a brush roller.

Preferably, in the pretreatment process of step (6), after applying the pretreatment agent to the embossing layer, a transition treatment step is included in which the pretreatment agent penetrates into the interior of the embossing layer, and after completion of the transition treatment step the embossing layer is removed.

Further preferably, during the transition treatment in which the pretreatment agent penetrates into the interior of the embossing layer, the hardness of the embossing layer decreases.

Further preferably, during the transition treatment in which the pretreatment agent penetrates into the interior of the embossing layer, the viscosity of the embossing layer decreases.

Preferably, after the embossing layer is removed in step (7), a post-treatment step is further included, the post-treatment step comprising applying a post-treatment agent to the surface of the three-dimensional wood grain layer.

Preferably, the post-treatment agent comprises at least a volatile organic solvent.

Preferably, the post-treatment agent further comprises water.

Preferably, the post-treatment agent further comprises a resin monomer.

Preferably, the post-treatment agent further comprises a surfactant and/or an emulsifier.

Preferably, the volatile organic solvent comprises any one or a combination of acetone, ethanol, methanol, N,N-dimethylformamide, or dimethyl sulfoxide.

Preferably, the application amount of the post-treatment agent is 5-20 g/m².

Preferably, in the post-treatment process after the embossing layer is removed in step (7), a step of raising the surface temperature of the three-dimensional wood grain layer is further included.

Preferably, in the post-treatment process after the embossing layer is removed in step (7), the surface temperature of the three-dimensional wood grain layer is raised to 40-80 °C.

Preferably, the curing method of the resin liquid includes any one of photocuring, thermal curing, or electron beam curing.

Preferably, the resin liquid comprises at least a photocrosslinkable resin and a photoinitiator.

Preferably, the embossing liquid in step (4) comprises at least an inhibitor for preventing the polymerization of the photocrosslinkable resin.

Preferably, the photocrosslinkable resin comprises any one or a combination of unsaturated polyester, epoxy resin, acrylic resin, acrylic-modified polyurethane resin, acrylic-modified silicone resin, acrylic-modified epoxy resin, waterborne epoxy acrylate, waterborne polyurethane acrylate, or waterborne polyester acrylate.

Preferably, the photoinitiator comprises any one of radical polymerization initiators, cationic polymerization initiators, energy-transfer type initiators, or ionic reaction type initiators.

Preferably, the resin liquid further comprises a thermosetting resin.

Preferably, the thermosetting resin comprises any one or a combination of epoxy resin, phenolic resin, melamine-formaldehyde resin, furan resin, unsaturated polyester resin, silicone resin, or polybutadiene resin.

Preferably, the resin liquid further comprises a curing agent for catalyzing the curing of the thermosetting resin.

According to another aspect of the present invention, the applicant provides a printed board having a three-dimensional wood grain effect.

According to a second aspect, to achieve the above invention objective, the present invention is realized through the following technical solution:

A printed board having a three-dimensional wood grain effect,
comprising a substrate;
wherein a surface of the substrate comprises a wood grain underlying layer and a three-dimensional wood grain layer prepared according to the method described above.

Preferably, a primer layer for improving the adhesion performance of the printed board surface, a color paint layer disposed on the surface of the primer layer for covering the color of the substrate, and a pattern layer located on the surface of the color paint layer for forming a wood grain pattern are further sequentially disposed between the substrate and the wood grain underlying layer.

The primer layer is used to improve the adhesion performance of the printed board surface;
the color paint layer is provided on the surface of the primer layer to cover the color of the substrate;
the pattern layer is located on the surface of the color paint layer to form a wood grain pattern.

Preferably, the outer surface of the three-dimensional wood grain layer is further covered with a topcoat layer, and at least a portion of the topcoat layer is lower than the upper surface of the three-dimensional wood grain layer.

According to another aspect of the present invention, the applicant provides a method for preparing a printed board having a three-dimensional wood grain effect.

According to a third aspect, to achieve the above invention objective, the present invention is realized through the following technical solution:

A method for preparing the printed board having the three-dimensional wood grain effect as described above,
comprising at least the steps of preparing the wood grain underlying layer and the three-dimensional wood grain layer according to the method described above.

According to another aspect of the present invention, the applicant provides an application method of the printed board having a three-dimensional wood grain effect.

According to a fourth aspect, to achieve the above invention objective, the present invention is realized through the following technical solution:

The application of the printed board having the three-dimensional wood grain effect as described above in floors, decorative wall panels, or ceiling panels.

Therefore, the present invention has the following advantageous effects:
(1) By adding a pretreatment step, the resin liquid on the surface of the wood grain underlying layer is cured, thereby reducing the hardness and/or viscosity of the embossing layer, effectively improving the problem of incomplete removal of the embossing layer by a steel brush roller, and thus achieving a three-dimensional wood grain structure on the surface of the colored pattern layer with fine and natural texture, clear 3D pattern, good decorative visual effect, realistic tactile feel, sharp wood grain edges, and accurate alignment.
(2) By adding a post-treatment step after the embossing layer is removed, the residual embossing liquid and/or a portion of the resin liquid mixed with the embossing liquid and/or at least a portion of the resin liquid covered by the embossing liquid is effectively removed, thereby further obtaining a stone-plastic floor with sharp wood grain edges and accurate alignment having a 3D wood grain texture, which improves product quality and enhances aesthetics.

### BRIEF DESCRIPTION OF THE DRAWINGS

FIG. 1 is a schematic reproduction of steps (1)-(7) of the method of the present invention.
FIG. 2 is a schematic reproduction of steps (S.9)-(S.12) in Example 9 of the present invention.

### DETAILED DESCRIPTION OF THE EMBODIMENTS

The present invention will be further described below in conjunction with the accompanying drawings and specific embodiments. Those skilled in the art will be able to implement the present invention based on these descriptions. In addition, the embodiments of the present invention described below are generally only part of the embodiments of the present invention and not all embodiments. Therefore, all other embodiments obtained by those skilled in the art based on the embodiments of the present invention without creative effort shall fall within the protection scope of the present invention.

According to one aspect of the present invention, the applicant provides a method for generating a three-dimensional wood grain on the surface of a pattern by adding a pretreatment step.

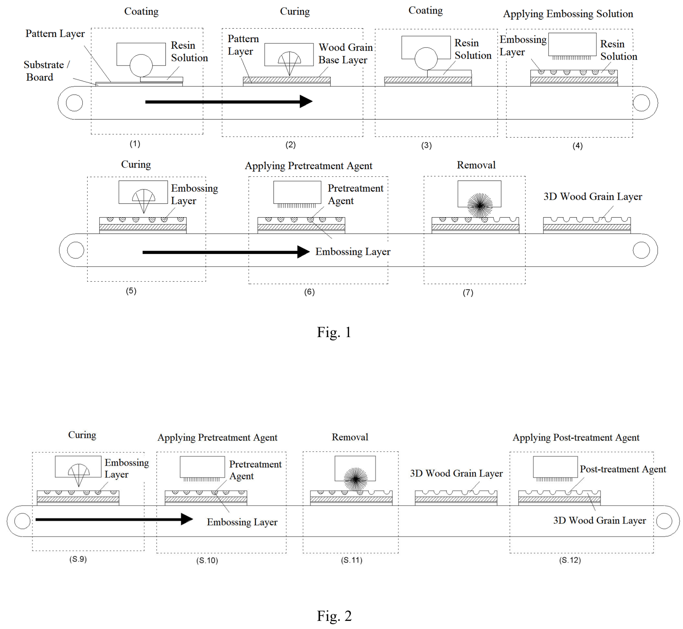

As shown in FIG. 1, according to a first aspect, to achieve the above invention objective, the present invention is realized through the following technical solution:

A method for generating a three-dimensional wood grain on the surface of a pattern, comprising the following steps:
(1) covering at least a portion of the surface of a pattern layer with a resin liquid;
(2) curing at least a portion of the resin liquid on the surface of the pattern layer to form a wood grain underlying layer;
(3) covering at least a portion of the surface of the wood grain underlying layer with at least one layer of resin liquid;
(4) applying an embossing liquid along the color pattern on at least a portion of the surface of the resin liquid on the surface of the wood grain underlying layer, thereby forming an embossing layer comprising the embossing liquid and/or at least a portion of the resin liquid mixed with the embossing liquid and/or at least a portion of the resin liquid covered by the embossing liquid;
(5) curing the resin liquid other than the embossing layer formed in the previous step;
(6) further comprising a pretreatment step in which the embossing layer is penetrated by a pretreatment agent;
(7) removing the embossing layer, thereby forming a three-dimensional wood grain layer on the surface of the wood grain underlying layer.

In the process of developing the production technology of stone-plastic flooring with 3D wood texture, after repeated experiments, the applicant has found that by applying embossing liquid along the color pattern on at least a portion of the surface of the resin liquid on the surface of the wood grain underlying layer to form an embossing layer, a three-dimensional wood grain structure is formed on the pattern layer of the stone-plastic floor. The embossing layer is mixed with a portion of curable resin liquid, which contains additives such as photoinitiators, curing agents, leveling agents, wetting agents, slip agents, rheology modifiers, etc. After prolonged use, the additives contained therein precipitate continuously, causing changes in the composition of the embossing layer. When the embossing layer is not completely cured (uncured and/or partially cured), it presents a viscous liquid state. When the solvent in the embossing layer evaporates too quickly, the viscosity of the embossing layer increases, and the surface tension correspondingly increases, thereby increasing the resistance of the embossing layer to the steel brush and further increasing the difficulty of mechanically removing the embossing layer. Meanwhile, the embossing layer adheres to the vacant parts of the steel brush roller in a gel-like state, with strong adhesion, forming layer-by-layer sludge-like deposits covering the surface of the steel brush roller, making it difficult for the brush to contact and thoroughly remove the embossing layer. In addition, after long-term use, as the amount of embossing layer adhering to the raised parts of the steel brush roller gradually increases, and after the solvent in the embossing layer completely evaporates, a large amount of dried crust forms on the roller with significantly increased adhesion, making the surface of the steel brush roller smoother, thereby further increasing the difficulty of removing the embossing layer. Furthermore, when the embossing layer is completely cured, it becomes a hard solid. Since the embossing liquid and/or at least a portion of the resin liquid mixed with the embossing liquid and/or at least a portion of the resin liquid covered by the embossing liquid forms long-chain molecules during curing, these long chains interconnect through chemical bonds or physical interactions to form a hard and dense high-strength polymer network structure. This network structure gives the embossing layer excellent mechanical strength and stability, allowing it to resist friction, wear, and scraping, thus making it difficult to be thoroughly removed mechanically.

Therefore, the applicant has innovatively added a pretreatment step, such that after the resin liquid on the surface of the wood grain underlying layer other than the embossing layer is cured, a pretreatment agent is applied to the surface of the embossing layer to penetrate into the embossing layer.

When the embossing layer is not completely cured (uncured and/or partially cured), it presents a viscous liquid state with high adhesion. After the pretreatment agent penetrates into the embossing layer, it can physically or chemically adsorb and interact with unreacted monomers or oligomers in the incompletely cured embossing layer, thereby weakening the intermolecular forces between molecular chains, increasing intermolecular distance, dispersing and dissolving the unreacted monomers or oligomers, and thus effectively reducing the viscosity of the embossing layer. At the same time, the pretreatment agent also interacts with crosslinking additives mixed into the embossing layer, loosening the crosslinked network structure, increasing fluidity, reducing surface tension, making it less likely to adhere to the steel brush roller, thereby further effectively improving the problem of incomplete removal of the embossing layer by the steel brush roller.

When the embossing layer is completely cured, it presents a hard solid state. After the pretreatment agent penetrates into the embossing layer, due to the presence of pores and capillaries in the cured embossing layer, the pretreatment agent can infiltrate into the interior, where it interacts with polymer molecules in the embossing layer, altering molecular arrangement and void structure, thereby softening the embossing layer, effectively reducing the surface hardness, and making it easier to be removed by the steel brush. Furthermore, as the pretreatment agent penetrates, it can disrupt non-covalent bonds among polymers mixed in the embossing layer such as resins, and interact with functional groups in the polymers, thereby disturbing intermolecular forces among polymer chains, increasing intermolecular distance, causing swelling, and leading to expansion of the volume of the embossing liquid and/or at least a portion of the resin liquid mixed with the embossing liquid and/or at least a portion of the resin liquid covered by the embossing liquid, thereby further reducing the viscosity of the embossing layer. As a result, a three-dimensional wood grain structure with fine and natural texture, clear 3D pattern, high resolution, accurate alignment, good decorative visual effect, sharp wood grain edges, and realistic tactile feel is formed on the surface of the colored pattern layer.

In addition, the applicant has also added a post-treatment step after the embossing layer is removed, wherein the surface of the three-dimensional wood grain layer is treated with a post-treatment agent, thereby effectively removing the residual embossing liquid and/or a portion of the resin liquid mixed with the embossing liquid and/or at least a portion of the resin liquid covered by the embossing liquid. This effectively prevents the embossing liquid and/or a portion of the resin liquid mixed with the embossing liquid and/or at least a portion of the resin liquid covered by the embossing liquid from depositing in the recesses or protrusions of the three-dimensional wood grain layer, thereby preventing the formation of residues on its surface that alter its appearance. Otherwise, protrusions may visually appear more rounded, edges of the wood grain less sharp, and the texture less realistic, while recesses may appear deeper and darker, reducing gloss, obscuring texture, and negatively affecting the visual effect, quality, and aesthetics of the three-dimensional wood grain layer. This further leads to misalignment between the final wood grain shape and the underlying colored pattern layer, thereby reducing the quality of the stone-plastic flooring with 3D wood texture.

In a preferred embodiment of the present invention, at least two layers of resin liquid are coated on at least a portion of the surface of the wood grain underlying layer in step (3).

By coating at least two layers of resin liquid on the surface of the wood grain underlying layer in step (3), a relatively thick three-dimensional wood grain layer is formed, which effectively prevents the subsequent removal of the embossing layer by the steel brush from exposing parts of the pattern layer, which would otherwise make the exposed pattern layer susceptible to abrasion or even peeling by external force. Applying multiple layers of resin liquid on the surface of the wood grain underlying layer in step (3) can effectively avoid the steel brush removing material too deeply, which may scratch through the wood grain underlying layer or even damage the underlying pattern layer, leading to blurred 3D patterns, reduced clarity, and poor decorative effect. By controlling the coating amount of the resin liquid, the embossing depth can be freely adjusted, thereby enhancing the three-dimensional effect of the wood grain layer.

In a preferred embodiment of the present invention, the embossing liquid in step (4) is applied on the surface of the resin liquid and/or infiltrates into the interior of the resin liquid.

The embossing liquid in step (4) is applied on the surface of the resin liquid and/or infiltrates into the interior of the resin liquid to form an embossing layer. When the resin liquid is a UV-curable resin liquid, a layer of embossing liquid capable of preventing ultraviolet penetration is applied to the surface of the uncured resin liquid, thereby allowing the resin liquid beneath the embossing liquid to remain in a liquid uncured state, forming the embossing layer. In subsequent processing, the embossing layer is removed mechanically (e.g., by steel brush scraping), thereby obtaining a highly realistic three-dimensional wood grain layer.

When the resin liquid is a resin obtained via the principle of free radical polymerization, when the embossing liquid is applied onto the surface of the uncured resin liquid or penetrates downward into the uncured resin liquid, the embossing liquid can absorb the free radicals used for the polymerization of the resin liquid, causing free radical polymerization and curing, so that the portions of the resin liquid containing the embossing liquid can remain in a liquid, uncured state. This uncured portion of the resin liquid forms the embossing layer, which is removed in subsequent processing through mechanical cleaning (such as scraping with a steel brush), thereby obtaining a highly realistic three-dimensional wood grain layer.

When the embossing liquid penetrates downward into the uncured resin liquid, it displaces the uncured resin liquid, so that the volume occupied contains only the embossing liquid. The embossing liquid may be polymerizable or non-polymerizable, and after the embossing liquid is removed by mechanical cleaning (such as scraping with a steel brush), a highly realistic three-dimensional wood grain layer is obtained.

In a preferred embodiment of the present invention, the surface tension of the embossing liquid in step (4) is higher than that of the resin liquid.

The embossing liquid in step (4) having a surface tension higher than the resin liquid helps the embossing liquid to penetrate into the resin liquid while maintaining the shape of the area covered by the embossing liquid, thereby producing a relatively complex concave/convex structure. If the surface tension of the embossing liquid is too low relative to the resin liquid, the embossing liquid easily wets the surface of the resin liquid, resulting in a reduced clarity of the finally formed 3D pattern. The greater the difference in surface tension between the embossing liquid and the resin liquid, the better the corresponding embossing effect.

In a preferred embodiment of the present invention, the embossing liquid in step (4) at least includes a curable resin.

In a preferred embodiment of the present invention, the curable resin contained in the embossing liquid has a surface energy lower than that of the three-dimensional wood grain layer after curing.

In a preferred embodiment of the present invention, the curable resin contained in the embossing liquid includes any one of fluorocarbon resin, fluorosilicone resin, or organosilicone resin.

In another preferred embodiment of the present invention, the curable resin contained in the embossing liquid includes acrylic resin, epoxy resin, or other curable resins.

Through the above arrangements, the adhesion between the curable resin in the embossing liquid and the three-dimensional wood grain layer is reduced after curing, thereby allowing the embossing layer to be easily removed by mechanical means.

In a preferred embodiment of the present invention, the density of the embossing liquid is greater than that of the resin liquid.

By adjusting the density of the embossing liquid so that it is greater than that of the resin liquid, after applying the same volume of embossing liquid onto at least a portion of the surface of the uncured resin liquid, the mass of the embossing liquid is higher. This increases the kinetic energy of the embossing liquid as it enters the uncured resin liquid, further increasing the depth of the finally formed three-dimensional wood grain layer. At the same time, the higher-density embossing liquid, upon entering the resin liquid, due to its own gravity, more easily penetrates downward into the uncured resin liquid quickly.

In a preferred embodiment of the present invention, the embossing liquid further includes a density modifier for adjusting the density of the embossing liquid.

In a preferred embodiment of the present invention, the density modifier is an inorganic solid powder additive.

In another preferred embodiment of the present invention, the density modifier is an inorganic solid additive.

In a further preferred embodiment of the present invention, the density modifier is any one or a combination of calcium carbonate and silicon dioxide.

In a preferred embodiment of the present invention, the embossing liquid includes at least two embossing liquids with different surface tensions.

To make the tactile feel of the three-dimensional wood grain layer closer to real wood, in addition to controlling the depth of the three-dimensional wood grain structure, it is also necessary to control the width of the structure. Currently, width control is mainly based on the amount of embossing liquid sprayed: generally, the more embossing liquid sprayed or the larger the individual droplets, the wider the wood grain grooves; conversely, the less embossing liquid sprayed or the smaller the droplets, the narrower the wood grain grooves. To form a wider three-dimensional wood grain structure, more embossing liquid is needed, which results in waste since the embossing liquid needs to be removed in the final step. To form a narrower three-dimensional wood grain structure, less embossing liquid is required, which easily leads to insufficient depth and may also result in a lack of precision, causing unnatural wood grain defects. Therefore, the embossing liquid may include both embossing liquid for forming wider three-dimensional wood grain structures and embossing liquid for forming narrower three-dimensional wood grain structures.

This is because embossing liquid with lower surface tension more easily spreads on the surface of the resin liquid of the wood grain base layer. The contact angle between the lower-surface-tension embossing liquid and the surface of the resin liquid is smaller, allowing it to cover a larger area for the same volume, effectively achieving a wider three-dimensional wood grain structure with less embossing liquid. Embossing liquid with higher surface tension spreads less easily on the surface of the resin liquid of the wood grain base layer. The contact angle is larger, and for the same volume, the droplet height is higher. Therefore, under the condition of using less higher-surface-tension embossing liquid, finer and deeper three-dimensional wood grain structures can be obtained.

In a preferred embodiment of the present invention, step (6) further includes a step of applying a pretreatment agent to the embossing layer.

After the resin liquid on the surface of the wood grain base layer outside the formed embossing layer is cured, the pretreatment agent is applied to the surface of the embossing layer. By applying the pretreatment agent, the pretreatment agent penetrates into the embossing layer. When the embossing layer is not fully cured (uncured or partially cured), the embossing layer has high adhesion and is in a viscous liquid state. After penetrating into the embossing layer, the pretreatment agent can interact with unreacted monomers or oligomers and other organic substances in the uncured or partially cured embossing layer through physical or chemical adsorption, weakening the intermolecular forces within the embossing layer, increasing the intermolecular distance, causing the unreacted monomers or oligomers and other organic substances to disperse and dissolve, thereby effectively reducing the viscosity of the embossing layer. Simultaneously, the pretreatment agent can also interact with crosslinking auxiliaries mixed in the embossing layer, loosening the crosslinked network structure formed in the embossing layer, increasing fluidity, reducing surface tension, and preventing adhesion to the steel brush roller, thereby effectively improving the problem of incomplete removal of the embossing layer by the steel brush roller.

When the embossing layer is fully cured, it presents a relatively hard solid state. After the pretreatment agent penetrates into the embossing layer, due to the pores and capillaries present in the cured embossing layer, the pretreatment agent can penetrate inside and interact with the polymer molecules in the embossing layer, altering molecular arrangement and void structure, causing the embossing layer to soften, further effectively reducing surface hardness and facilitating removal by a steel brush. In addition, when penetrating the embossing layer, the pretreatment agent can break non-covalent bonds among resins and other polymers mixed in the embossing layer and interact with functional groups in the resins and polymers, thereby disturbing intermolecular interactions between polymer chains, increasing chain distance, causing swelling, resulting in the expansion of the volume of the embossing liquid and/or at least part of the resin liquid mixed with the embossing liquid and/or at least part of the resin liquid covered by the embossing liquid, protruding outward, facilitating subsequent mechanical removal. This achieves a three-dimensional wood grain structure on the color pattern layer surface with delicate and natural texture, clear 3D pattern, high pattern resolution, accurate alignment, good visual decorative effect, sharp wood grain edges, and realistic tactile feel.

In a preferred embodiment of the present invention, the pretreatment agent at least includes an organic solvent.

When the embossing layer is not fully cured (uncured or partially cured), the embossing layer has high adhesion and is in a viscous liquid state. If the pretreatment agent includes an organic solvent, after penetrating the embossing layer, the organic solvent can interact physically or chemically with unreacted monomers or oligomers and other organic substances in the uncured or partially cured embossing layer, weakening the intermolecular forces between chains, increasing intermolecular distance, causing dispersion of unreacted monomers or oligomers, thereby effectively reducing the viscosity of the embossing layer. Simultaneously, the organic solvent can interact with crosslinking auxiliaries mixed in the embossing layer, loosening the crosslinked network structure, increasing fluidity, reducing surface tension, and preventing adhesion to the steel brush roller, further improving the incomplete removal of the embossing layer by the steel brush roller.

When the embossing layer is fully cured, it presents a relatively hard solid state. After the organic solvent penetrates into the embossing layer, it interacts with polymer molecules in the embossing layer, altering molecular arrangement and void structure, causing the embossing layer to soften, further effectively reducing surface hardness, and facilitating removal by a steel brush. Additionally, when penetrating the embossing layer, the organic solvent can break non-covalent bonds among resins and other polymers mixed in the embossing layer, interact with functional groups in the resins and polymers, disturbing intermolecular interactions, increasing polymer chain distances, causing swelling, resulting in the volume expansion of the embossing liquid and/or at least part of the resin liquid mixed with the embossing liquid and/or at least part of the resin liquid covered by the embossing liquid, protruding outward, facilitating subsequent mechanical removal. This achieves a three-dimensional wood grain structure on the pattern layer surface with delicate and natural texture, clear 3D pattern, high pattern resolution, accurate alignment, good visual decorative effect, sharp wood grain edges, and realistic tactile feel.

In a preferred embodiment of the present invention, the organic solvent includes any one or a combination of halogenated hydrocarbons, ketones, aromatic hydrocarbons, esters, alcohols, and ethers.

Halogenated hydrocarbons, ketones, aromatic hydrocarbons, esters, alcohols, and ether organic solvents belong to polar solvents and have good solubility, being compatible with the resins, embossing liquids, resin monomers, and the like mixed in the embossing layer. When halogenated hydrocarbons, ketones, aromatic hydrocarbons, esters, alcohols, and ether organic solvents penetrate into the incompletely cured (uncured or partially cured) embossing layer, the polar sites in their molecules can interact with the polar sites in the molecules of resins, embossing liquids, resin monomers, and the like mixed in the embossing layer, forming various interaction forces such as van der Waals forces and hydrogen bonds, thereby shortening intermolecular distances and forming a stable dissolution system. Meanwhile, during the dissolution process, halogenated hydrocarbons, ketones, aromatic hydrocarbons, esters, alcohols, and ether organic solvents occupy the voids between small molecule additives such as embossing liquids and resin monomers, weakening the attractions between the small molecule additives and enhancing their solubility. In addition, molecules of halogenated hydrocarbons, ketones, aromatic hydrocarbons, esters, alcohols, and ether organic solvents intercalate into the polymer molecules such as resins, entering their voids and changing the polymer molecular structure and the interactions between adjacent molecules, further reducing the viscosity of the polymer molecules and increasing their fluidity. The dispersion of resins, embossing liquids, resin monomers, and the like mixed in the embossing layer is improved, fluidity increases, thereby reducing the viscosity of the embossing layer, preventing adhesion, effectively avoiding the formation of large amounts of sludge-like deposits adhering to the steel brush roller and difficult to remove, which would further affect the visual effect of the 3D wood grain layer.

When halogenated hydrocarbons, ketones, aromatic hydrocarbons, esters, alcohols, and ether organic solvents penetrate into a fully cured embossing layer, the organic solvents interact with the polymer molecules such as resins in the embossing layer, altering the arrangement and void structure of the polymers, causing the glass transition temperature of the polymers to decrease, thereby further softening the embossing layer and effectively reducing the surface hardness of the embossing layer, making it easier to be removed by a steel brush. Meanwhile, as the organic solvents penetrate into the embossing layer, they can break the non-covalent bonds between the resins and other polymers mixed in the embossing layer, and interact with functional groups in the resins and other polymers, thereby disturbing the interaction forces between polymer chains, increasing the distances between polymer chains, causing swelling, and resulting in the volume expansion and outward protrusion of the embossing liquid and/or at least part of the resin liquid mixed with the embossing liquid and/or at least part of the resin liquid covered by the embossing liquid, facilitating subsequent mechanical removal. Moreover, halogenated hydrocarbons, ketones, aromatic hydrocarbons, esters, alcohols, and ether organic solvents have good solubility, which can promote the dissolution and diffusion of small molecules such as embossing liquids and resin monomers mixed in the embossing layer into the solution, allowing them to disperse from the embossing layer and facilitating subsequent removal. In addition, these organic solvents are liquids at room temperature and pressure, with good fluidity, low viscosity, and strong volatility, leaving minimal or no residue on the surface of the 3D wood grain layer, effectively avoiding corrosion and damage to the 3D wood grain layer. Thus, a fine and natural texture, clear 3D patterns, high pattern resolution, accurate alignment, good visual decorative effect, sharp wood grain edges, and realistic tactile 3D wood grain structures are achieved on the pattern layer surface.

In a preferred embodiment of the present invention, the organic solvents include any one or a combination of dichloromethane, bromopropane, trichloroethane, acetone, toluene, methanol, ethanol, diethyl ether, and chloroform.

In a preferred embodiment of the present invention, the pretreatment agent further includes resin monomers.

In a preferred embodiment of the present invention, the resin monomers are any one or a combination of acrylic monomers and epoxy monomers.

In a preferred embodiment of the present invention, the applied amount of the pretreatment agent is 1~5 g/m².

When the applied amount of the pretreatment agent is less than 1 g/m², the resins, embossing liquids, resin monomers, and the like mixed in the embossing layer cannot fully contact and dissolve with the pretreatment agent, the components in the embossing layer are unevenly dispersed, resin precipitation easily occurs, leveling is poor, leading to aggregation and adhesion on the mechanical equipment used for removing the embossing layer. Meanwhile, an insufficient amount of pretreatment agent prolongs the reaction time of the pretreatment step, complicating the process and further reducing production efficiency. When the applied amount of the pretreatment agent exceeds 5 g/m², excessive use may completely dissolve the resins, embossing liquids, resin monomers, and the like mixed in the embossing layer, increasing fluidity excessively and thereby damaging the structure and shape of the 3D wood grain layer. In addition, excessive pretreatment agent may penetrate downward and diffuse into the underlying pattern layer, causing pattern contamination, mottling, or blurring, further affecting the product quality of SPC flooring with 3D wood grain texture. Moreover, pretreatment agents contain volatile and flammable substances, and excessive use may increase the risk of fire and explosion.

In a preferred embodiment of the present invention, the pretreatment process in step (6) further includes a step of bringing the surface of the embossing layer into contact with a brush roller.

In the pretreatment process of step (6), the pretreatment agent applied to the surface of the embossing layer is evenly spread using a brush roller, ensuring sufficient contact of the pretreatment agent with the surface of the embossing layer and facilitating downward penetration into the embossing layer.

In a preferred embodiment of the present invention, the pretreatment process in step (6) further includes a transition treatment step after applying the pretreatment agent to the embossing layer, in which the pretreatment agent penetrates into the embossing layer, and after completion of the transition step, the embossing layer is removed.

In a further preferred embodiment of the present invention, the transition treatment step after applying the pretreatment agent to the embossing layer may include leaving the embossing layer to stand for a period of time to prolong the reaction time of the pretreatment agent entering and reacting with the embossing layer, thereby allowing more thorough penetration and better contact.

In a further preferred embodiment of the present invention, the transition treatment step after applying the pretreatment agent to the embossing layer may include adding suitable surfactants, auxiliaries, etc., to the embossing layer, making the surface of the embossing layer more wettable, thereby increasing its affinity with the pretreatment agent and facilitating the penetration of the pretreatment agent into the embossing layer.

In a further preferred embodiment of the present invention, the transition treatment step after applying the pretreatment agent to the embossing layer may include raising the surface temperature of the embossing layer, so that the viscosity and surface tension of the embossing liquids, resin liquids, resin monomers, and the like mixed in the embossing layer decrease with increasing temperature, enhancing the permeability of the embossing layer and facilitating the pretreatment agent to penetrate into the embossing layer.

In a preferred embodiment of the present invention, after the embossing layer is removed in step (7), a post-treatment step is further included, in which a post-treatment agent is applied to the surface of the 3D wood grain layer.

By adding a post-treatment step after the removal of the embossing layer, the surface of the 3D wood grain layer is treated with a post-treatment agent, effectively removing residual embossing liquid and/or at least part of the resin liquid mixed with the embossing liquid and/or at least part of the resin liquid covered by the embossing liquid. This further effectively prevents deposition of these materials in the recesses or protrusions of the 3D wood grain layer, which could otherwise cause residuals on the surface, make protrusions appear visually rounded, reduce sharpness of wood grain edges, and decrease realism. Recesses would appear deeper and darker, reducing surface gloss, blurring textures, affecting visual effect, and further impacting the overall quality and aesthetics of the 3D wood grain layer. It may also cause misalignment between the formed wood grain shape and the underlying color pattern layer, reducing the product quality of SPC flooring with 3D wood grain texture.

In a preferred embodiment of the present invention, the post-treatment agent includes at least a volatile organic solvent.

Including volatile organic solvents in the post-treatment agent can quickly dilute and dissolve residual embossing liquids and/or at least part of the resin liquids mixed with the embossing liquid and/or at least part of the resin liquids covered by the embossing liquid on the surface of the 3D wood grain layer, improving removal efficiency. At the same time, it ensures that the surface of the 3D wood grain layer is dry, with no solvent residue, avoiding damage to its structure, maintaining appearance, and ensuring safety.

In a preferred embodiment of the present invention, the post-treatment agent further includes water.

Water is a good solvent capable of dissolving water-soluble dirt. Including water in the post-treatment agent helps it contact and penetrate residual embossing liquids and/or at least part of the resin liquids mixed with the embossing liquid and/or at least part of the resin liquids covered by the embossing liquid, improving removal of water-soluble dirt. Meanwhile, water in the post-treatment agent effectively reduces the concentration of the post-treatment agent, further reducing its corrosiveness to the 3D wood grain layer and lowering costs. In addition, water in the post-treatment agent, when mixed with residual embossing liquids and/or at least part of the resin liquids mixed with the embossing liquid and/or at least part of the resin liquids covered by the embossing liquid and volatile organic solvents, forms a stable fluid through emulsification, facilitating subsequent cleaning by rinsing or wiping.

In a preferred embodiment of the present invention, the post-treatment agent further includes resin monomers.

In a preferred embodiment of the present invention, the post-treatment agent further includes surfactants and/or emulsifiers.

Surfactants can reduce the surface tension between the post-treatment agent and residual embossing liquids and/or at least part of the resin liquids mixed with the embossing liquid and/or at least part of the resin liquids covered by the embossing liquid, allowing full contact and easier penetration, improving removal efficiency, and preventing residues on the 3D wood grain layer surface. Surfactants also provide dispersion, causing the post-treatment agent to react with residual embossing liquids and/or at least part of the resin liquids mixed with the embossing liquid and/or at least part of the resin liquids covered by the embossing liquid to form a mixed liquid, effectively reducing its viscosity, facilitating subsequent cleaning by rinsing. Emulsifiers allow residual embossing liquids and/or at least part of the resin liquids mixed with the embossing liquid and/or at least part of the resin liquids covered by the embossing liquid to form emulsions with the post-treatment agent for easy removal. Additionally, emulsifiers prevent re-deposition of these residuals on the 3D wood grain layer surface.

In a preferred embodiment of the present invention, the volatile organic solvents include any one or a combination of acetone, ethanol, methanol, N,N-dimethylformamide, and dimethyl sulfoxide.

In a preferred embodiment of the present invention, the applied amount of the post-treatment agent is 5~20 g/m².

When the applied amount of the post-treatment agent is less than 5 g/m², the reaction with residual embossing liquids and/or at least part of the resin liquids mixed with the embossing liquid and/or at least part of the resin liquids covered by the embossing liquid may be insufficient, failing to achieve the removal effect, further affecting the structure and aesthetics of the 3D wood grain layer. Insufficient post-treatment agent also leads to unstable production, difficult process control, longer production cycles, and reduced efficiency. When the applied amount exceeds 20 g/m², volatile organic solvents in the post-treatment agent volatilize into the environment, potentially causing pollution. Moreover, volatile organic solvents are flammable and explosive, and excessive addition increases risks of fire and explosion.

In a preferred embodiment of the present invention, after the removal of the embossing layer in step (7), the post-treatment process further includes raising the surface temperature of the 3D wood grain layer.

In the post-treatment process after the removal of the embossing layer in step (7), the surface temperature of the 3D wood grain layer is increased by heating. This promotes interactions between molecules of resins, embossing liquids, resin monomers, and the like remaining in residual embossing liquids and/or at least part of the resin liquids mixed with the embossing liquid and/or at least part of the resin liquids covered by the embossing liquid and solvent molecules in the post-treatment agent, increasing mutual diffusion rates and allowing more complete dissolution, thus accelerating the removal of surface residues from the 3D wood grain layer. In addition, heating reduces the viscosity of the residual embossing liquids and/or at least part of the resin liquids mixed with the embossing liquid and/or at least part of the resin liquids covered by the embossing liquid, allowing solvent molecules in the post-treatment agent to penetrate more easily into contained molecules such as resins, embossing liquids, and resin monomers, improving removal efficiency. Moreover, heating increases solvent evaporation rates, simultaneously drying and removing the post-treatment agent, effectively preventing residue on the 3D wood grain layer surface.

In a preferred embodiment of the present invention, after the removal of the embossing layer in step (7), the surface temperature of the 3D wood grain layer is raised to 40~80°C.

In the post-treatment process after the removal of the embossing layer in step (7), if the surface temperature of the 3D wood grain layer is too low (below 40°C), the evaporation rate and diffusion rate of volatile organic solvents in the post-treatment agent decrease, making penetration into residual embossing liquids and/or at least part of the resin liquids mixed with the embossing liquid and/or at least part of the resin liquids covered by the embossing liquid difficult, resulting in insufficient mutual dissolution, poor residue removal, and possible accumulation of post-treatment agent on the 3D wood grain layer surface, further corroding or damaging its structure. If the surface temperature of the 3D wood grain layer is too high (above 80°C), excessive thermal expansion may cause deformation, cracking, or discoloration of the pattern on SPC flooring with 3D wood grain texture, affecting product quality and visual effect.

In a preferred embodiment of the present invention, the curing method of the resin liquid includes any one of photopolymerization, thermal curing, or electron beam curing.

In a preferred embodiment of the present invention, the resin liquid at least includes photoreactive resins and photoinitiators.

In a preferred embodiment of the present invention, the embossing liquid in step (4) at least includes a polymerization inhibitor for preventing the photoreactive resin from polymerizing.

Adding a polymerization inhibitor to the embossing liquid can quench free radicals generated by the photoinitiator under light, effectively preventing the polymerization of resin liquid in the portion containing the polymerization inhibitor or slowing its curing rate, allowing the resin liquid in the portion containing the polymerization inhibitor to remain liquid or semi-solid after step (5), making the embossing layer easier to remove.

In a preferred embodiment of the present invention, the photoreactive resins include any one or a combination of unsaturated polyester, epoxy resin, acrylic resin, acrylic-modified polyurethane resin, acrylic-modified organosilicon resin, acrylic-modified epoxy resin, aqueous epoxy acrylate, aqueous polyurethane acrylate, and aqueous polyester acrylate.

In a preferred embodiment of the present invention, the photoinitiator includes any one of radical polymerization initiators, cationic polymerization initiators, energy transfer type initiators, or ionic reaction type initiators.

In a preferred embodiment of the present invention, the resin composition at least includes a thermosetting resin.

In a preferred embodiment of the present invention, the thermosetting resin includes one or more of epoxy resin, phenolic resin, melamine-formaldehyde resin, furan resin, unsaturated polyester resin, organosilicon resin, and polybutadiene resin.

In a preferred embodiment of the present invention, the resin composition further includes a curing agent for catalyzing the curing of the thermosetting resin.

According to another aspect of the present invention, the applicant provides a printed panel with a three-dimensional wood grain effect.

According to the second aspect, to achieve the above-mentioned purposes of the invention, the present invention is implemented by the following technical solution:

A printed panel with a three-dimensional wood grain effect,
comprising a substrate;
wherein the surface of the substrate comprises a wood grain base layer and a three-dimensional wood grain layer prepared by the method described above.

In a preferred embodiment of the present invention, between the substrate and the wood grain base layer, there are sequentially provided:
a primer layer for enhancing the adhesion performance of the printed panel surface;
a color paint layer provided on the surface of the primer layer for covering the color of the substrate;
a pattern layer located on the surface of the color paint layer for forming a wood grain pattern.

In a preferred embodiment of the present invention, the outer surface of the three-dimensional wood grain layer is further covered with a topcoat layer, and at least a portion of the topcoat layer is below the upper surface of the three-dimensional wood grain layer.

According to another aspect of the present invention, the applicant provides a method for preparing a printed panel with a three-dimensional wood grain effect.

According to the third aspect, to achieve the above-mentioned purposes of the invention, the present invention is implemented by the following technical solution:

A method for preparing the printed panel with a three-dimensional wood grain effect as described above,
which at least includes the steps for preparing the wood grain base layer and the three-dimensional wood grain layer as described above.

In a further preferred embodiment of the present invention, the method for preparing the printed panel with a three-dimensional wood grain effect further comprises the following steps:
covering at least a portion of the surface of the printed panel with a primer and curing to obtain a primer layer;
covering at least a portion of the surface of the primer layer with a color paint and curing to obtain a color paint layer;
covering at least a portion of the surface of the color paint layer with an ink for forming a wood grain pattern and curing to obtain a pattern layer;
covering at least a portion of the surface of the pattern layer with the wood grain base layer and three-dimensional wood grain layer prepared by the method described above;
covering at least a portion of the surface of the three-dimensional wood grain layer with a topcoat and curing to obtain a topcoat layer.

In a further preferred embodiment of the present invention,
the coverage amount of the primer is 10~15 g/m²;
the coverage amount of the color paint is 15~25 g/m²;
the coverage amount of the ink is 6~10 g/m²;
the coverage amount of the topcoat is 10~30 g/m².

In a further preferred embodiment of the present invention, the color paint layer is white.

In a further preferred embodiment of the present invention, the color paint at least comprises a photo-crosslinkable resin, a photoinitiator, and white pigment powder.

According to another aspect of the present invention, the applicant provides an application method of the printed panel with a three-dimensional wood grain effect.

According to the fourth aspect, to achieve the above-mentioned purposes of the invention, the present invention is implemented by the following technical solution:
the printed panel with a three-dimensional wood grain effect as described above is applied in flooring, decorative wall panels, or ceiling panels.

### Example 1

A method for generating three-dimensional wood grain on the pattern surface, comprising the following steps:
(S.1) placing an SPC panel with dimensions of 1560 mm × 970 mm × 4.85 mm on the surface of a conveying device moving in a fixed direction;
(S.2) during conveying in step (S.1), the SPC panel sequentially passes through the first and second roll coaters, so that the SPC panel contacts the coating rolls and sequentially applies 12 g/m² of primer (wherein the primer comprises: 90% UV-curable varnish HYS01-1, 5% photoinitiator 184, 0.5% photoinitiator TPO, 4.5% diluent hydroxyethyl acrylate) and 17 g/m² of UV-curable white paint (wherein the white paint comprises: 50% UV-curable epoxy HYS01-1, 30% titanium dioxide, 5% photoinitiator 184, 0.5% photoinitiator TPO, 14.5% diluent hydroxyethyl acrylate) on the surface of the SPC panel, curing them respectively with 395 nm and 8 W/cm² UV lamps, so that the primer forms a primer layer and a white color paint layer is formed on the surface of the primer layer;
(S.3) conveying the SPC panel obtained in step (S.2) to a first inkjet printer, applying 7 g/m² of ink on the surface of the color paint layer via the first inkjet printer, and curing the ink to form a pattern layer with a wood grain pattern on the surface of the primer layer;
(S.4) conveying the SPC panel obtained in step (S.3) to a third roll coater, applying 45 g/m² of UV-curable resin composition (resin composition comprises: 90% Dow Corning 65 Additive, 5% photoinitiator 184, 0.5% photoinitiator TPO, 4.5% diluent hydroxyethyl acrylate) on the surface of the pattern layer, curing sequentially under 395 nm and 8 W/cm² UV lamps and 160 W/cm² Hg lamp to form a wood grain base layer;
(S.5) conveying the SPC panel obtained in step (S.4) to a fourth roll coater, so that the coating roll of the fourth roll coater rolls 75 g/m² of resin composition (resin composition comprises: 90% Dow Corning 65 Additive, 5% photoinitiator 184, 0.5% photoinitiator TPO, 4.5% diluent hydroxyethyl acrylate) on the surface of the wood grain base layer along the conveying direction of the SPC panel (the rotation direction of the roll is clockwise);
(S.6) after coating the first layer of resin composition, conveying the SPC panel forward on the conveying device surface, ensuring that before being conveyed to the next roll coater, the fourth roll coater does not apply any force to the resin composition;
(S.7) conveying the SPC panel obtained in step (S.6) to a fifth roll coater, so that the coating roll of the fifth roll coater rolls 80 g/m² of resin composition on the SPC panel surface in the opposite direction of the SPC panel conveying direction (the rotation direction of the roll is clockwise);
(S.8) conveying the SPC panel obtained in step (S.7) to a second inkjet printer, spraying 8 g/m² of embossing liquid (embossing liquid comprises: 45.5% PEG600DA diacrylate monomer, 20.5% hydroquinone monomethyl ether HQMME, 10% 2-tert-butyl-4-methoxyphenol MTBHQ, 24% diethylene glycol butyl ether) onto the surface of the resin composition, allowing the embossing liquid to penetrate downward into the resin composition and mix with the resin composition to form an embossing layer;
(S.9) curing the portion of the resin composition on the SPC panel surface excluding the embossing layer obtained in step (S.8) by sequential exposure to 395 nm and 8 W/cm² UV lamps and 160 W/cm² Hg lamp for deep curing;
(S.10) conveying the SPC panel obtained in step (S.9) to a sixth roll coater, rolling 2 g/m² of a pretreatment agent (wherein the pretreatment agent comprises 95% ethanol and 5% butyl acrylate) onto the surface of the SPC panel;
(S.11) conveying the SPC panel obtained in step (S.10) under a cleaning device comprising steel brushes, so that the embossing layer is brushed out by the steel brushes, thereby forming the three-dimensional wood grain layer;
(S.12) conveying the SPC panel obtained in step (S.11) through a seventh roll coater and 395 nm and 8 W/cm² UV lamps, coating 12 g/m² of a first topcoat on the surface of the three-dimensional wood grain layer, and curing to obtain a first topcoat layer;
(S.13) conveying the SPC panel obtained in step (S.12) through an eighth roll coater and 395 nm and 8 W/cm² UV lamps, coating 12 g/m² of a second topcoat on the surface of the first topcoat layer, and curing to obtain a second topcoat layer.

### Example 2

The difference between this embodiment and Example 1 lies in that in step (S.10), the roll coating amount of the pretreatment agent is 1 g/m². All other steps are the same as in Example 1.

### Example 3

The difference between this embodiment and Example 1 lies in that in step (S.10), the roll coating amount of the pretreatment agent is 5 g/m². All other steps are the same as in Example 1.

### Example 4

The difference between this embodiment and Example 1 lies in that in step (S.10), the pretreatment agent comprises 95% dichloromethane and 5% butyl acrylate. All other steps are the same as in Example 1.

### Example 5

The difference between this embodiment and Example 1 lies in that in step (S.10), the pretreatment agent comprises 95% chloroform and 5% butyl acrylate. All other steps are the same as in Example 1.

### Example 6

The difference between this embodiment and Example 1 lies in that in steps (S.4)~(S.9), the composition and curing method of the resin composition are changed. The resin composition is selected as a thermosetting resin system, specifically: 100 parts bisphenol A epoxy resin E-51, 30 parts methyl tetrahydrophthalic anhydride, 15 parts butyl glycidyl ether BGE, 10 parts accelerator DMP30. After mixing the above components to obtain the thermosetting resin composition, it is applied onto the SPC panel surface, and the environment temperature of the SPC panel is raised to 140°C by infrared heating to cure the thermosetting resin composition. All other steps are the same as in Example 1.

### Example 7

The difference between this embodiment and Example 1 lies in that in step (S.8), 8 g/m² of embossing liquid (embossing liquid is a 60% solid-content polytetrafluoroethylene emulsion with a density of 1.5 g/cm³) is sprayed onto the surface of the resin composition, and the embossing liquid penetrates downward into the resin composition and mixes with the resin composition to form an embossing layer. All other steps are the same as in Example 1. Since the polytetrafluoroethylene emulsion is aqueous, after penetrating into the resin composition, it does not mix with the resin composition. After the resin composition is cured, part of the water in the polytetrafluoroethylene emulsion evaporates due to heat, forming a polytetrafluoroethylene layer. Due to the low surface energy of the polytetrafluoroethylene layer, it does not adhere to the cured resin composition, making it easier to remove.

### Example 8

The difference between this embodiment and Embodiment 1 lies in that: in step (S.8), the embossing liquid sprayed on the surface of the resin liquid is a 60% solid-content polytetrafluoroethylene (PTFE) emulsion, and nanosilica is added to the embossing liquid, such that the density of the embossing liquid is increased from 1.5 g/cm³ to 2.0 g/cm³. Other aspects are the same as in Embodiment 1.

### Comparative Example 1

The difference between this comparative example and Embodiment 1 lies in that: step (S.10) is omitted, that is, after step (S.9), steps (S.11), (S.12), and (S.13) are performed sequentially, so that no pretreatment agent is roll-coated on the surface of the SPC board. Other aspects are the same as in Embodiment 1.

### Comparative Example 2

The difference between this comparative example and Embodiment 1 lies in that: in step (S.10), the pretreatment agent contains ethanol but does not contain butyl acrylate. Other aspects are the same as in Embodiment 1.

### Comparative Example 3

The difference between this comparative example and Embodiment 1 lies in that: in step (S.10), the roll-coating amount of the pretreatment agent is 0.5 g/m². Other aspects are the same as in Embodiment 1.

### Comparative Example 4

The difference between this comparative example and Embodiment 1 lies in that: in step (S.10), the roll-coating amount of the pretreatment agent is 6 g/m². Other aspects are the same as in Embodiment 1.

### [Product Performance Testing]

According to the methods of Embodiments 1-8 and Comparative Examples 1-4, 50 printed boards were batch-produced for each, and product performance tests were conducted.

### Clarity Test: Conducted according to the standard JIS K7374.

Brushed Effect Grade Test: Twenty evaluators were organized to evaluate the brushed effect of the printed boards under test. The surface of the printed boards was observed with the naked eye to feel the sharpness of the wood grain edges, and the evaluation results were recorded according to grades. The grade with the most votes was taken as the final grade of the printed board. The naked-eye observation of the sharpness of the wood grain edges was divided into five grades. The five grades, corresponding scores, and evaluation criteria are shown in Table 1.

**Table 1 - Sharpness Grades of Wood Grain Edges, Scores, and Criteria**

| Grade | Score | Standard |
|---|---|---|
| Level 1 | 21-25 | Observe the surface of the printed board: the edges of the wood grain are distinctly sharp, the wood grain texture is delicate and natural, and gently touching along the grain, the sides of the grooves on the board surface can be clearly felt as sharp. |
| Level 2 | 16-20 | Observe the surface of the printed board: the edges of the wood grain are fairly sharp, and the wood grain texture is relatively fine. |
| Level 3 | 11-15 | Observe the surface of the printed board: the edges of the wood grain are sharp, but the sharpness is less pronounced than Level 2. |
| Level 4 | 6-10 | Observe the surface of the printed board: the edges of the wood grain have some sharpness; noticeable sharpness requires pressing with some force, and the sides of the grooves are relatively flat. |
| Level 5 | 1-5 | Observe the surface of the printed board: the edges of the wood grain are hardly sharp, the wood grain edges are rounded, and the sides of the grooves are very smooth and flat. |

| | | |
|---|---|---|
| Note: From Level 1 to Level 5, the sharpness of the wood grain edges gradually decreases. | | |

Pattern Alignment Accuracy Test: Twenty evaluators were organized to evaluate the pattern alignment accuracy of the printed boards under test. The surface of the printed boards was observed with the naked eye to feel the degree of pattern misalignment, and the evaluation results were recorded according to grades and scores. The grade with the most votes was taken as the final grade of the printed board. The naked-eye observation of the pattern alignment accuracy was divided into five grades, with corresponding scores and criteria shown in Table 2.

**Table 2 - Pattern Alignment Accuracy Grades, Scores, and Criteria**

| Grade | Score | Criteria |
|---|---|---|
| Level I | 16-20 | Observe the surface of the printed board. The pattern alignment is accurate without deviation. |
| Level II | 11-15 | Observe the surface of the printed board. The pattern alignment is relatively accurate, with minor deviation. |
| Level III | 6-10 | Observe the surface of the printed board. The pattern alignment has a certain degree of deviation, more obvious than Level II, and partial overlap exists in the 3D pattern. |
| Level IV | 1-5 | Observe the surface of the printed board. The pattern alignment is obviously deviated, and the 3D pattern overlaps significantly. |

| | | |
|---|---|---|
| Note: From Level I to Level IV, the alignment accuracy gradually decreases. | | |

The performance test results of the printed boards from Embodiments 1-8 and Comparative Examples 1-4 are shown in Table 3.

**Table 3**

| Group | Item | | | | |
|---|---|---|---|---|---|
| | Clarity (%) | Brushed Effect Grade | Brushed Effect Score | Pattern Alignment Accuracy Grade | Pattern Alignment Accuracy Score |
| Example 1 | 80.5 | Level 1 | 21 | Level I | 16 |
| Example 2 | 78.5 | Level 2 | 19 | Level II | 14 |
| Example 3 | 79.1 | Level 2 | 20 | Level II | 15 |
| Example 4 | 77.4 | Level 2 | 18 | Level II | 13 |
| Example 5 | 76.9 | Level 2 | 18 | Level II | 13 |
| Example 6 | 75.1 | Level 2 | 16 | Level II | 11 |
| Example 7 | 76.3 | Level 2 | 17 | Level II | 12 |
| Example 8 | 76.1 | Level 2 | 17 | Level II | 12 |
| Comparative Example 1 | 65.7 | Level 4 | 10 | Level IV | 5 |
| Comparative Example 2 | 71.2 | Level 3 | 12 | Level III | 8 |
| Comparative Example 3 | 73.4 | Level 3 | 13 | Level III | 9 |
| Comparative Example 4 | 74.1 | Level 3 | 14 | Level III | 10 |

From the data analysis in Table 3, it can be seen that adding a pretreatment step, in which after the resin liquid surface of the wood grain base layer is cured except for the formed embossing layer, a pretreatment agent is applied onto the surface of the embossing layer, effectively improves the problem that the steel brush roller cannot completely remove the embossing layer. As a result, a printed board surface is obtained with delicate and natural texture, clarity of the pattern up to 83.5%, sharp wood grain edges, Level 1 brushed effect, realistic touch, and Level I pattern alignment accuracy (as in Embodiment 1), achieving accurate 3D wood grain structure.

### Example 9

The method for producing a 3D wood grain on the pattern surface includes the following steps:
(S.1) Place an SPC board with dimensions of 1560 mm × 970 mm × 4.85 mm on a conveying device surface moving in a fixed direction;
(S.2) During the conveying process, the SPC board sequentially passes through the first and second roller coaters, applying 12 g/m² of a primer (the primer comprises: 90% UV-curable varnish HYS01-1, 5% photoinitiator 184, 0.5% photoinitiator TPO, 4.5% diluent hydroxyethyl acrylate) and 17 g/m² of UV-curable white paint (the white paint comprises: 50% UV-curable epoxy HYS01-1, 30% titanium dioxide, 5% photoinitiator 184, 0.5% photoinitiator TPO, 14.5% diluent hydroxyethyl acrylate), cured by 395 nm UV light at 8 W/cm², forming a primer layer and a white color layer on the surface;
(S.3) Convey the SPC board obtained in step (S.2) to the first inkjet printer, spray 7 g/m² of ink onto the color layer surface, and cure the ink to form a pattern layer with a wood grain pattern on the primer layer surface;
(S.4) Convey the SPC board from step (S.3) to the third roller coater, roller-coat 45 g/m² of UV-curable resin liquid (comprising 90% Dow Corning 65 Additive, 5% photoinitiator 184, 0.5% photoinitiator TPO, 4.5% diluent hydroxyethyl acrylate) on the pattern layer surface, and cure sequentially under 395 nm and 8 W/cm² UV lamps and 160 W/cm² Hg lamps to form a wood grain base layer;
(S.5) Convey the SPC board from step (S.4) to the fourth roller coater, roller-coat 75 g/m² of resin liquid (same composition) on the wood grain base layer surface along the conveying direction (roller rotation clockwise);
(S.6) After applying the first layer of resin liquid, convey the SPC board forward and ensure that the fourth roller coater does not apply any force to the resin liquid before reaching the next roller coater;
(S.7) Convey the SPC board from step (S.6) to the fifth roller coater, roller-coat 80 g/m² of resin liquid against the conveying direction (roller rotation clockwise);
(S.8) Convey the SPC board from step (S.7) to the second inkjet printer, spray 8 g/m² of embossing liquid (comprising 45.5% PEG600DA, 20.5% HQMME, 10% MTBHQ, 24% diethylene glycol butyl ether) onto the resin liquid surface, allowing it to penetrate downward and mix with the resin liquid to form an embossing layer;
(S.9) Cure the resin liquid portion other than the embossing layer by 395 nm and 8 W/cm² UV lamps and 160 W/cm² Hg lamps to achieve deep curing;
(S.10) Convey the SPC board from step (S.9) to the sixth roller coater, roll-coat 2 g/m² of pretreatment agent (comprising 95% ethanol, 5% butyl acrylate) on the SPC board surface;
(S.11) Convey the SPC board from step (S.10) to a cleaning device with steel brushes, so that the embossing layer is brushed out to form the 3D wood grain layer;
(S.12) Convey the SPC board from step (S.11) to the seventh roller coater, roll-coat 13 g/m² of post-treatment agent (comprising 48% water, 32% ethanol, 10% butyl acrylate, 7% polysorbate-80, 3% isooctylphenoxy polyethoxy ethanol) on the surface and heat to 55°C. Figure 2 shows a schematic of steps (S.9)-(S.12) in this embodiment, facilitating better understanding of these four steps;
(S.13) Convey the SPC board from step (S.12) to the eighth roller coater, roll-coat 12 g/m² of the first topcoat on the 3D wood grain layer surface, and cure to obtain the first topcoat layer;
(S.14) Convey the SPC board from step (S.13) to the ninth roller coater, roll-coat 12 g/m² of the second topcoat on the first topcoat layer surface, and cure to obtain the second topcoat layer.

### Example 10

The difference between this embodiment and Embodiment 9 lies in that: in step (S.12), the roll-coating amount of the post-treatment agent is 5 g/m². Other aspects are the same as in Embodiment 9.

### Example 11

The difference between this embodiment and Embodiment 9 lies in that: in step (S.12), the roll-coating amount of the post-treatment agent is 20 g/m². Other aspects are the same as in Embodiment 9.

### Example 12

The difference between this embodiment and Embodiment 9 lies in that: in step (S.12), the post-treatment agent is roll-coated on the SPC board surface and heated to 40°C. Other aspects are the same as in Embodiment 9.

### Example 13

The difference between this embodiment and Embodiment 9 lies in that: in step (S.12), the post-treatment agent is roll-coated on the SPC board surface and heated to 80°C. Other aspects are the same as in Embodiment 9.

### Comparative Example 5

The difference between this comparative example and Embodiment 9 lies in that: in step (S.12), the post-treatment agent comprises 80%
ethanol, 10% butyl acrylate, 7% polysorbate-80, 3% isooctylphenoxy polyethoxy ethanol, i.e., the post-treatment agent contains no water. Other aspects are the same as in Embodiment 9.

### Comparative Example 6

The difference between this comparative example and Embodiment 9 lies in that: in step (S.12), the post-treatment agent comprises 53% water, 37% ethanol, 10% butyl acrylate, i.e., the post-treatment agent contains no polysorbate-80 or isooctylphenoxy polyethoxy ethanol. Other aspects are the same as in Embodiment 9.

### Comparative Example 7

The difference between this comparative example and Embodiment 9 lies in that: in step (S.12), the post-treatment agent comprises 48% water, 42% ethanol, 7% polysorbate-80, 3% isooctylphenoxy polyethoxy ethanol, i.e., the post-treatment agent contains no butyl acrylate. Other aspects are the same as in Embodiment 9.

### Comparative Example 8

The difference between this comparative example and Embodiment 9 lies in that: in step (S.12), the post-treatment agent comprises 48% water, 32% ethanol, 10% butyl acrylate, 10% polysorbate-80, i.e., the post-treatment agent contains no isooctylphenoxy polyethoxy ethanol. Other aspects are the same as in Embodiment 9.

### Comparative Example 9

The difference between this comparative example and Embodiment 9 lies in that: in step (S.12), the post-treatment agent comprises 48% water, 32% ethanol, 10% butyl acrylate, 10% isooctylphenoxy polyethoxy ethanol, i.e., the post-treatment agent contains no polysorbate-80. Other aspects are the same as in Embodiment 9.

### Comparative Example 10

The difference between this comparative example and Embodiment 9 lies in that: in step (S.12), the roll-coating amount of the post-treatment agent is 4 g/m². Other aspects are the same as in Embodiment 9.

### Comparative Example 11

The difference between this comparative example and Embodiment 9 lies in that: in step (S.12), the roll-coating amount of the post-treatment agent is 25 g/m². Other aspects are the same as in Embodiment 9.

### Comparative Example 12

The difference between this comparative example and Embodiment 9 lies in that: in step (S.12), the post-treatment agent is roll-coated on the SPC board surface and left standing at room temperature (25°C). Other aspects are the same as in Embodiment 9.

### Comparative Example 13

The difference between this comparative example and Embodiment 9 lies in that: in step (S.12), the post-treatment agent is roll-coated on the SPC board surface and heated to 85°C. Other aspects are the same as in Embodiment 9.

### [Product Performance Testing]

According to the methods of Embodiment 1, Embodiments 9-13, and Comparative Examples 5-13, 50 printed boards were batch-produced for each, and product performance tests were conducted.

### Clarity Test: Conducted according to the standard JIS K7374.

Brushed Effect Grade Test: Twenty evaluators were organized to evaluate the brushed effect of the printed boards under test. The surface of the printed boards was observed with the naked eye to feel the sharpness of the wood grain edges, and the evaluation results were recorded according to grades. The grade with the most votes was taken as the final grade of the printed board. The naked-eye observation of the sharpness of the wood grain edges was divided into five grades, with the five grades, scores, and evaluation criteria as described in Table 1 above.

Pattern Alignment Accuracy Test: Twenty evaluators were organized to evaluate the pattern alignment accuracy of the printed boards under test. The surface of the printed boards was observed with the naked eye to feel the degree of pattern misalignment, and the evaluation results were recorded according to grades and scores. The grade with the most votes was taken as the final grade of the printed board. The naked-eye observation of the pattern alignment accuracy was divided into five grades, with the five grades, scores, and evaluation criteria as described in Table 2 above.

The performance test results of the printed boards from Example 1, Examples 9-13, and Comparative Examples 5-13 are shown in Table 4.

**Table 4**

| **Group** | **Item** | | | | |
|---|---|---|---|---|---|
| | **Clarity (%)** | **Brushed Effect Grade** | **Brushed Effect Score** | **Pattern Alignment Accuracy Grade** | **Pattern Alignment Accuracy Score** |
| Example 1 | 80.5 | Level 1 | 21 | Level I | 16 |
| Example 9 | 85.7 | Level 1 | 25 | Level I | 20 |
| Example 10 | 83.6 | Level 1 | 23 | Level I | 18 |
| Example 11 | 84.1 | Level 1 | 24 | Level I | 19 |
| Example 12 | 82.6 | Level 1 | 22 | Level I | 17 |
| Example 13 | 81.1 | Level 1 | 22 | Level I | 17 |
| Comparative Example 5 | 75.0 | Level 2 | 16 | Level II | 11 |
| Comparative Example 6 | 76.2 | Level 2 | 16 | Level II | 11 |
| Comparative Example 7 | 75.9 | Level 2 | 16 | Level II | 11 |
| Comparative Example 8 | 76.9 | Level 2 | 17 | Level II | 12 |
| Comparative Example 9 | 76.7 | Level 2 | 17 | Level II | 12 |
| Comparative Example 10 | 78.3 | Level 2 | 19 | Level II | 14 |
| Comparative Example 11 | 79.5 | Level 2 | 20 | Level II | 15 |
| Comparative Example 12 | 77.5 | Level 2 | 18 | Level II | 13 |
| Comparative Example 13 | 75.4 | Level 2 | 16 | Level II | 11 |

From the data analysis in Table 4, it can be seen that adding a pretreatment step, in which after the resin liquid surface of the wood grain base layer is cured except for the embossing layer, a pretreatment agent is applied on the embossing layer surface, and then adding a post-treatment step after the embossing layer is removed, allows the 3D wood grain layer surface to be applied with the post-treatment agent. This achieves complete removal of the embossing layer, removal of residual embossing liquid and/or at least part of the resin liquid mixed with the embossing liquid, and/or at least part of the resin liquid covered by the embossing liquid. As a result, a printed board surface is obtained with delicate and natural texture, clarity of the pattern up to 85.7%, sharp wood grain edges, better brushed effect, realistic touch, and more accurate pattern alignment in the 3D wood grain structure.

The above only provides detailed description of preferred embodiments and principles of the present invention. For those skilled in the art, based on the ideas provided by the present invention, modifications in specific implementations may exist, and these modifications should also be regarded as within the scope of the present invention.

## Claims

1. A method for generating a three-dimensional wood grain on a pattern surface, **characterized in that** it comprises the following steps:
(1) allowing at least a portion of the surface of the pattern layer to be covered with a resin solution;
(2) curing at least a portion of the resin solution on the surface of the pattern layer to form a wood grain base layer;
(3) allowing at least a portion of the surface of the wood grain base layer to be covered with at least one layer of resin solution;
(4) applying an embossing solution onto at least a portion of the surface of the resin solution on the surface of the wood grain base layer along the colored pattern, thereby forming an embossing layer from the embossing solution and/or at least a portion of the resin solution mixed with the embossing solution and/or at least a portion of the resin solution covered by the embossing solution;
(5) curing the resin solution other than the embossing layer formed in the previous step;
(6) a pretreatment step in which the embossing layer is impregnated with a pretreatment agent;
(7) removing the embossing layer, thereby forming a 3D wood grain layer on the surface of the wood grain base layer.

2. The method for generating a 3D wood grain on a pattern surface according to claim 1, **characterized in that** in step (3), at least a portion of the surface of the wood grain base layer is covered with at least two layers of resin solution.

3. The method for generating a 3D wood grain on a pattern surface according to claim 1, **characterized in that** in step (4), the embossing solution is applied to the surface of the resin solution and/or penetrates into the interior of the resin solution.

4. The method for generating a 3D wood grain on a pattern surface according to claim 1 or 3, **characterized in that** the surface tension of the embossing solution in step (4) is higher than that of the resin solution.

5. The method for generating a 3D wood grain on a pattern surface according to claim 1 or 3, **characterized in that** the embossing solution in step (4) comprises at least a curable resin.

6. The method for generating a 3D wood grain on a pattern surface according to claim 5, **characterized in that** after curing, the curable resin contained in the embossing solution has a surface energy lower than that of the 3D wood grain layer.

7. The method for generating a 3D wood grain on a pattern surface according to claim 5, **characterized in that** the curable resin contained in the embossing solution comprises any one of fluorocarbon resin, fluorosilicone resin, or organosilicon resin.

8. The method for generating a 3D wood grain on a pattern surface according to claim 1 or 3, **characterized in that** the density of the embossing solution is greater than that of the resin solution.

9. The method for generating a 3D wood grain on a pattern surface according to claim 8, **characterized in that** the embossing solution further comprises a density regulator for adjusting the density of the embossing solution.

10. The method for generating a 3D wood grain on a pattern surface according to claim 9, **characterized in that** the density regulator is an inorganic solid powder additive.

11. The method for generating a 3D wood grain on a pattern surface according to claim 1 or 3, **characterized in that** the embossing solution comprises at least two types of embossing solutions having different surface tensions.

12. The method for generating a 3D wood grain on a pattern surface according to claim 1, **characterized in that** step (6) further comprises a step of applying a pretreatment agent to the embossing layer.

13. The method for generating a 3D wood grain on a pattern surface according to claim 1 or 12, **characterized in that** the pretreatment agent comprises at least an organic solvent.

14. The method for generating a 3D wood grain on a pattern surface according to claim 13, **characterized in that** the organic solvent comprises any one or a combination of halogenated hydrocarbons, ketones, aromatic hydrocarbons, esters, alcohols, or ethers.

15. The method for generating a 3D wood grain on a pattern surface according to claim 14, **characterized in that** the organic solvent comprises any one or a combination of dichloromethane, bromo-propane, trichloroethane, acetone, toluene, methanol, ethanol, ether, or chloroform.

16. The method for generating a 3D wood grain on a pattern surface according to claim 1 or 12, **characterized in that** the pretreatment agent further comprises a resin monomer.

17. The method for generating a 3D wood grain on a pattern surface according to claim 16, **characterized in that** the resin monomer is any one or a combination of acrylic monomer or epoxy monomer.

18. The method for generating a 3D wood grain on a pattern surface according to claim 1 or 12, **characterized in that** the amount of the pretreatment agent applied is 1 - 5 g/m².

19. The method for generating a 3D wood grain on a pattern surface according to claim 1 or 12, **characterized in that** in the pretreatment process of step (6), the surface of the embossing layer is brought into contact with a brush roller.

20. The method for generating a 3D wood grain on a pattern surface according to claim 1 or 12, **characterized in that** in the pretreatment process of step (6), after the pretreatment agent is applied to the embossing layer, a transition treatment step is further included in which the pretreatment agent penetrates into the interior of the embossing layer, and the embossing layer is removed after completion of the transition treatment step.

21. The method for generating a 3D wood grain on a pattern surface according to claim 1, **characterized in that** after the embossing layer in step (7) is removed, a post-treatment step is further included, wherein the post-treatment step comprises applying a post-treatment agent to the surface of the 3D wood grain layer.

22. The method for generating a 3D wood grain on a pattern surface according to claim 21, **characterized in that** the post-treatment agent comprises at least a volatile organic solvent.

23. The method for generating a 3D wood grain on a pattern surface according to claim 21 or 22, **characterized in that** the post-treatment agent further comprises water.

24. The method for generating a 3D wood grain on a pattern surface according to claim 21 or 22, **characterized in that** the post-treatment agent further comprises a resin monomer.

25. The method for generating a 3D wood grain on a pattern surface according to claim 21 or 22, **characterized in that** the post-treatment agent further comprises a surfactant and/or an emulsifier.

26. The method for generating a 3D wood grain on a pattern surface according to claim 22, **characterized in that** the volatile organic solvent comprises any one or a combination of acetone, ethanol, methanol, N,N-dimethylformamide, or dimethyl sulfoxide.

27. The method for generating a 3D wood grain on a pattern surface according to claim 21, **characterized in that** the amount of the post-treatment agent applied is 5 - 20 g/m².

28. The method for generating a 3D wood grain on a pattern surface according to claim 21, **characterized in that** in the post-treatment process after the embossing layer is removed in step (7), a step of raising the surface temperature of the 3D wood grain layer is further included.

29. The method for generating a 3D wood grain on a pattern surface according to claim 28, **characterized in that** in the post-treatment process after the embossing layer is removed in step (7), the surface temperature of the 3D wood grain layer is raised to 40 - 80° C.

30. The method for generating a 3D wood grain on a pattern surface according to claim 1, 2, or 3, **characterized in that** the curing method of the resin solution comprises any one of photo-curing, thermal curing, or electron beam curing.

31. The method for generating a 3D wood grain on a pattern surface according to claim 30, **characterized in that** the resin solution comprises at least a photo-crosslinkable resin and a photoinitiator.

32. The method for generating a 3D wood grain on a pattern surface according to claim 1 or 3, **characterized in that** in step (4), the embossing solution further comprises a polymerization inhibitor for preventing the polymerization of the photo-crosslinkable resin.

33. The method for generating a 3D wood grain on a pattern surface according to claim 31, **characterized in that** the photo-crosslinkable resin comprises any one or a combination of unsaturated polyester, epoxy resin, acrylic resin, acrylate-modified polyurethane resin, acrylate-modified organosilicon resin, acrylate-modified epoxy resin, aqueous epoxy acrylate, aqueous polyurethane acrylate, or aqueous polyester acrylate.

34. The method for generating a 3D wood grain on a pattern surface according to claim 31, **characterized in that** the photoinitiator comprises any one of a radical polymerization initiator, a cationic polymerization initiator, an energy transfer-type initiator, or an ionic reaction-type initiator.

35. The method for generating a 3D wood grain on a pattern surface according to claim 30, **characterized in that** the resin solution further comprises a thermosetting resin.

36. The method for generating a 3D wood grain on a pattern surface according to claim 35, **characterized in that** the thermosetting resin comprises any one or a combination of epoxy resin, phenolic resin, melamine-formaldehyde resin, furan resin, unsaturated polyester resin, organosilicon resin, or polybutadiene resin.

37. The method for generating a 3D wood grain on a pattern surface according to claim 35, **characterized in that** the resin solution further comprises a curing agent for catalyzing the curing of the thermosetting resin.

38. A printed board having a 3D wood grain effect, **characterized in that** it comprises a substrate, wherein the surface of the substrate comprises a wood grain base layer and a 3D wood grain layer prepared by the method according to any one of claims 1 - 37.

39. The printed board having a 3D wood grain effect according to claim 38, **characterized in that** a primer layer for improving the adhesion performance of the printed board surface and a color paint layer for covering the color of the substrate are sequentially arranged between the substrate and the wood grain base layer, and a pattern layer for forming a wood grain pattern is located on the surface of the color paint layer.

40. The printed board having a 3D wood grain effect according to claim 38 or 39, **characterized in that** the outer surface of the 3D wood grain layer is further covered with a topcoat layer, and at least a portion of the topcoat layer is lower than the upper surface of the 3D wood grain layer.

41. A method for preparing a printed board having a 3D wood grain effect according to any one of claims 38 - 40, **characterized in that** it comprises at least the steps of preparing the wood grain base layer and the 3D wood grain layer according to any one of claims 1 - 37.

42. The use of the printed board having a 3D wood grain effect according to any one of claims 38 - 40 in flooring, decorative wall panels, or ceiling panels.
